# FASCICULE DE BREVET EUROPEEN

(11) **EP 2 714 384 B1**
(45) Date de publication et mention de la délivrance du brevet: **02.03.2016**
(21) Numéro de dépôt: 12728676.3
(22) Date de dépôt: 14.05.2012
(51) Int. Cl.: B32B 3/12, F02K 1/82, G10K 11/172, B32B 3/18

(54) **PROCÉDÉ DE FABRICATION D'UN PANNEAU D'ATTÉNUATION ACOUSTIQUE**
VERFAHREN ZUR HERSTELLUNG EINER SCHALLDÄMPFUNGSPLATTE
METHOD FOR MANUFACTURING A SOUND ATTENUATION PANEL

(30) Priorité: 01.06.2011 FR 1154808
(43) Date de publication de la demande: 09.04.2014
(73) Titulaire: Aircelle, 76700 Gonfreville L'Orcher (FR)
(72) Inventeur: MAZE, Franck, F-76600 Le Havre (FR); MOUTIER, John, F-76620 Le Havre (FR)
(74) Mandataire: Gaillarde, Frédéric F. Ch.
(86) Numéro de dépôt international: PCT/FR2012/051067
(87) Numéro de publication internationale: WO 2012/164189

(56) Documents cités:
- EP-A1- 1 398 472
- EP-A2- 1 889 713
- WO-A1-2010/089471
- WO-A2-2008/113904

## Description

La présente invention concerne le domaine de la réduction de bruit par les moteurs d'aéronefs.

Les turboréacteurs sont générateurs d'une pollution sonore importante.

Il existe une forte demande visant à réduire le bruit émis par les turboréacteurs et, ce d'autant plus que ces derniers deviennent de plus en plus puissants.

Il est connu qu'une partie importante de ce bruit est engendrée dans la zone d'entrée d'air de la nacelle à l'intérieur de laquelle est logé le moteur.

Dans cette zone, en effet, se trouve la soufflante du moteur, laquelle engendre un très fort bruit d'aspiration et de cisaillement de l'air.

In est connu, notamment, de former les parois de la nacelle avec des panneaux d'atténuation acoustique, afin de réduire le bruit engendré dans cette zone.

Ces panneaux sont, typiquement, formés d'une ou plusieurs couches à âme alvéolaire (structure dite "en nid d'abeille"), revêtus sur leur face dite externe, c'est-à-dire la plus éloignée radialement de l'axe du moteur, d'une peau imperméable à l'air, et sur leur face interne, c'est-à-dire la plus proche radialement de l'axe du moteur, d'une peau perméable à l'air.

Ces panneaux d'atténuation acoustique peuvent comprendre, en outre, entre les différentes couches à âme alvéolaire, une peau multiperforée dite septum.

Chaque panneau est assemblé en disposant les différentes peaux et couches à âme alvéolaire encollées sur un moule à la forme requise.

L'ensemble subit une cuisson dans un four de manière à serrer les couches et polymériser les adhésifs.

De tels panneaux constituent des résonateurs acoustiques aptes à "piéger" le bruit, et donc à atténuer les émissions sonores en direction de l'extérieur de la nacelle.

Pour des raisons pouvant tenir, par exemple, à la géométrie de la nacelle ou à des contraintes structurelles, il est souvent nécessaire de mettre bout-à-bout plusieurs blocs à âmes alvéolaires pour former les panneaux d'atténuation acoustique.

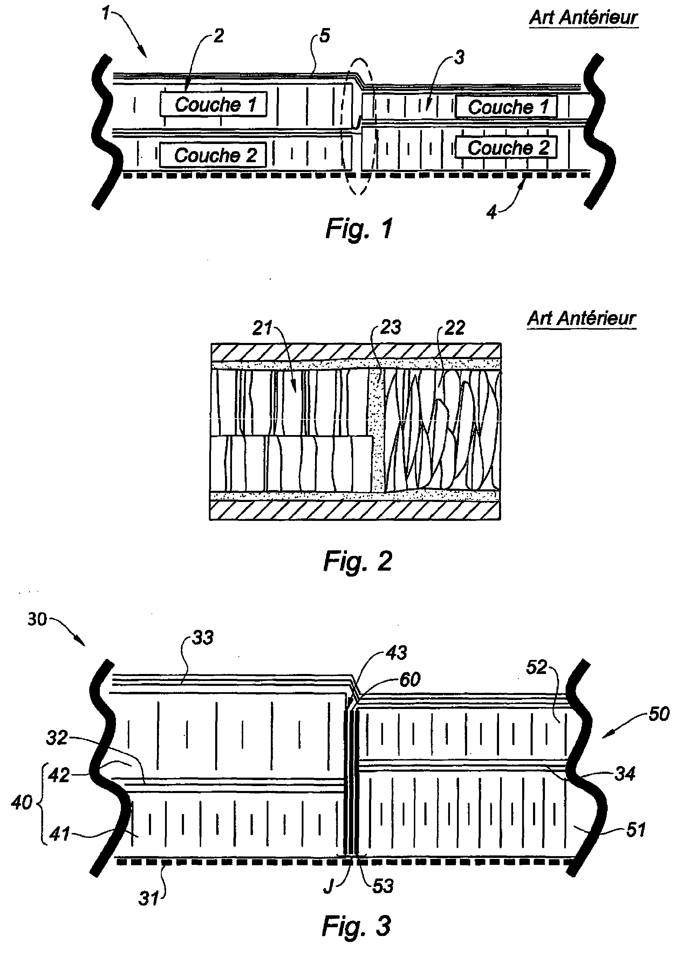

Plus particulièrement, en référence à la figure 1, les panneaux 1 d'atténuation acoustiques sont souvent formés de plusieurs structures 2,3 à âme alvéolaire mises bout à bout, d'épaisseur différente.

On peut citer, par exemple, un assemblage d'une première structure 2 à âme alvéolaire bicouche et d'une seconde structure à âme alvéolaire bicouche formant deux blocs d'épaisseur différente destinés à être joints dasn une zone de jonction J, l'ensemble des deux blocs étant recouvert de peaux interne 4 et externe 5 commune.

On parle alors de panneaux d'atténuation acoustique à acoustique distribuée.

Dans ce type de panneau d'atténuation acoustique à acoustique distribuée, l'épaisseur différente des deux structures à âme alévolaire à joindre peut etre due à la taille des alvéoles des couches en nid d'abeille et /ou du nombre de couches à âme alvéolaire de chaque structure à joindre.

Dans ce type de panneau, en outre, les propriétés acoustiques, c'est-à-dire le taux d'absorption du bruit en fonction de la fréquence et du niveau sonore dudit bruit, dépendent notamment de la jonction du ou des structures à âme alvéolaire.

Dans ce cas, les zones de jonction entre ces structures doivent être traitées avec un soin tout particulier si l'on souhaite conserver une bonne efficacité d'absorption acoustique des panneaux à acoustique distribuée.

Une technique courante utilisée pour relier les structures à âme alvéolaire entre elles consiste à enduire les bords adjacents de ces structures d'une colle qui se transforme en mousse à la cuisson, et qui forme ainsi une sorte de bande de liaison en matériau expansé entre ces bords.

L'avantage de cette technique est qu'elle permet d'obtenir un panneau qui, d'un point de vue mécanique, se comporte comme s'il était formé d'un seul bloc.

On connaît, plus particulièrement, un procédé de fabrication de panneaux à acoustique distribuée dans lesquels, en référence à la figure 2, une jonction entre deux structures à âme alvéolaire 20,21 est assurée par la présence d'un adhésif 23 intumescent.

Or, la présence d'un tel élément intumescent 23 génère une rupture du traitement acoustique dans la mesure où les alvéoles des structures en nid d'abeille peuvent être bouchées par cet adhésif 23 et les trous des peaux acoustiques et des septums, le cas échéant, peuvent être également bouchés par cet adhésif 23.

On connaît, en outre, des procédés sans adhésif dans lesquels, préalablement à la jonction bord-à-bord des structures à âme alvéolaire, on ouvre les alvéoles situées sur les bords adjacents des structures destinées à être jointes et, on joint bord-à-bord et à sec ces structures par imbrication des alvéoles ouvertes les unes dans les autres.

Un tel procédé ne garantit pas de bonnes jonctions dans le cadre des panneaux d'atténuation acoustique ménagés sur des pièces à forte courbure comme sur les nacelles cylindriques.

Il est alors nécessaire d'avoir recours à des moyens d'indexage extérieurs pour assurer le bon positionnement des différents structures acoustiques relativement l'une par rapport à l'autre, de type crayon sur pièce.

Il ne permet pas non plus d'éviter que deux septums respectivement de deux structures alvéolaires adjacentes devant être jointes se recouvrent dans la zone de jonction des deux structures.

Ce qui présente comme inconvénient d'affecter la qualité acoustique du panneau.

L'invention vise à remédier aux inconvénients précités.

Un but de la présente invention est de proposer un procédé de fabrication d'un panneau d'atténuation acoustique permettant d'obtenir des panneaux à acoustique distribuée dans lequel on optimise la surface acoustique.

Un autre but de la présente invention est de proposer un procédé de fabrication d'un panneau d'atténuation acoustique permettant d'obtenir des panneaux à acoustique distribuée allégés.

Il est également désirable de proposer un procédé de fabrication d'un panneau d'atténuation acoustique qui s'affranchit de l'utilisation élements indexage extérieurs tout en proposant un positionnement absolu des structures à âme alvéolaire dudit panneau par rapport au moule et du panneau en résultant.

A cet effet, l'invention propose un procédé de fabrication d'un panneau d'atténuation acoustique comprenant une première structure à âme alvéolaire et une seconde structure à âme alvéolaire jointes dans une zone de jonction, la première et la seconde structures à âme alvéolaire comprenant, chacune, au moins une couche à âme alvéolaire,
dans lequel :
a) On joint un bord de jonction de la première structure à âme alvéolaire à un bord de jonction correspondant de la seconde structure à âme alvéolaire formant la zone de jonction,
b) On place la première structure à âme alvéolaire et la seconde structure à âme alvéolaire entre une peau interne et une peau externe du panneau,
le procédé est remarquable en ce qu'il comprend, en outre :
une étape préalable à l'étape a) dans laquelle on intercale au moins un renfort de jonction entre le bord de jonction de la première structure à âme alvéolaire et le bord de jonction correspondant de la seconde structure à âme alvéolaire dans la zone de jonction, ce renfort de jonction s'étendant dans un plan transversal aux deux structures à âme alvéolaire et
une étape ultérieure dans laquelle on solidarise l'ensemble avec un moyen de liaison.

Grâce à un procédé selon l'invention et, plus particulièrement grâce à la présence d'un renfort de jonction à l'interface entre les deux structures à âme alvéolaire, on offre une liaison mécanique solide entre les deux structures.

Avantageusement, un tel renfort de jonction assure une fonction de butée d'indexage pour positionner de façon précise les différentes structures acoustiques les unes relativement aux autres et l'ensemble relativement au moule de fabrication du panneau.

Selon des modes particuliers de réalisation de l'invention, le procédé selon l'invention peut comprendre une ou plusieurs des caractéristiques suivantes, prises isolément ou en combinaison techniquement possibles :
- On indexe et on fixe sur un moule le renfort de jonction;
- Le renfort de jonction est non percé;
- La hauteur du renfort de jonction est adaptée pour former butée aux couches de chaque structure à âme alvéolaire;
- La hauteur du renfort de jonction est inférieure à la somme des épaisseurs des couches de chaque structure à âme alvéolaire;
- Un tel renfort de jonction peut être un profilé composite précuit ;
- Le profilé composite peut-être du septum ;
- Le septum peut être formé de plis de verre et d'époxyde;
- On intercale entre les couches d'une ou de chaque structure à âme alvéolaire un septum acoustique;
- le moyen de liaison est un moyen de collage;
- le moyen de collage est un film de colle appliqué sur au moins l'un des deux bords de jonction des structures à âme alvéolaire et/ou sur le renfort de jonction.

L'invention concerne, en outre, un panneau d'atténuation acoustique fabriqué selon le procédé susmentionné.

Un tel panneau peut être à acoustique distribuée.

D'autres caractéristiques et avantages de la présente invention apparaîtront à la lumière de la description qui va suivre, et à l'examen des figures ci-annexées, dans lesquelles :
- la figure 1 est une vue en coupe d'un panneau d'atténuation acoustique à acoustique distribuée selon un mode de réalisation de l'art antérieur,
- la figure 2 est une photographie en coupe d'un panneau d'atténuation acoustique à acoustique distribuée selon un autre mode de réalisation de l'art antérieur,
- la figure 3 est une vue schématique en coupe partielle d'un panneau d'atténuation acoustique selon la présente invention, et
- les figures 4a à 4f illustrent les différentes étapes successives d'un procédé de fabrication selon la présente invention d'un panneau d'atténuation acoustique de la figure 3 ;
- les figures 5a à 5c sont des vues en coupe de l'étape de mise en place d'un septum sur un moule du procédé de fabrication selon la présente invention ;
- les figures 6a et 6b sont deux vues en perspective de différentes couches successives d'un panneau selon la figure 3.

En référence à la figure 3, un panneau acoustique 30 comprend, habituellement, une première structure 40 à âme alvéolaire et une seconde structure 50 à âme alvéolaire jointes dans une zone de jonction J, la première 40 et la seconde 50 structures à âme alvéolaire comprenant, chacune, au moins une couche à âme alvéolaire.

Ces structures à âme alvéolaire sont prises en sandwich entre une peau interne dite acoustique 31 et une peau externe 32 du panneau dite pleine car ne comprenant aucun trou.

Ainsi en rapport avec la première structure à âme alvéolaire 40, on observe les couches successives suivantes dans le sens de l'épaisseur : la première peau 31 acoustique, une couche primaire 41 en nid d'abeille de la première structure 40, un septum 32 également perforé, une couche secondaire 42 en nid d'abeille de la première structure 40 et la seconde peau 33 pleine.

Les deux couches 41,42 primaire et secondaire en nid d'abeille forment la première structure 40 à âme alvéolaire du panneau 30.

Les nids d'abeilles de ces couches 41,42 sont constitués, classiquement, par des alvéoles adjacentes orientées dans le sens de l'épaisseur du nid d'abeille.

Par ailleurs, le nid d'abeille de la couche secondaire 42 peut être similaire au nid d'abeille de la couche primaire 41 ou non.

Son épaisseur peut être ainsi différente tout comme la largeur des cellules alvéolaires.

Le matériau formant les alvéoles des couches 41,42 peut être typiquement un alliage métallique léger adapté au domaine aéronautique ou tout autre matériau adapté.

Concernant le septum 32, ce dernier est en matériau composite à matrice organique comprenant un ou plusieurs plis de renfort noyés dans une résine.

Il peut également être percé de trous suivant un maillage particulier dont dépend la qualité acoustique du panneau 30.

Dans une variante non limitative de la présente invention, le matériau formant la peau interne 31 du panneau 30 peut être réalisé en tôle ou en tissu, et comporte des perforations situées en vis-à-vis des alvéoles.

Dans une variante non limitative de la présente invention, le matériau formant la peau externe 33 du panneau 30, quant à lui, peut être un matériau composite multicouche.

La description faite en regard des couches alvéolaires de la première structure 40 est également valable pour la seconde structure à âme alvéolaire 50, qui représente dans ce mode de réalisation, également deux couches 51, 52 à âme alvéolaire, entre lesquelles est intercalé un septum acoustique 34.

Le panneau acoustique 30 présenté est un panneau à acoustique distribuée, comme défini dans la partie introductive de la présente invention.

Ainsi, plus particulièrement, les deux structures 40,50 à âme alvéolaires présentent une épaisseur différente.

Sur cette figure 3, la première structure à âme alvéolaire 40 est plus épaisse que la seconde structure alvéolaire 50 adjacente.

Le principe de fonctionnement d'un tel panneau acoustique est connu en soi : ce panneau peut être monté, par exemple, dans la paroi interne d'une nacelle d'aéronef de manière à ce que la peau interne 31 soit située en vis-à-vis du moteur qui se trouve dans cette nacelle.

Le bruit émis par ce moteur pénètre dans les alvéoles par l'intermédiaire des orifices situés dans la peau interne 31, et vibre à l'intérieur de ces alvéoles qui constituent des résonateurs acoustiques, permettant ainsi une dissipation de l'énergie acoustique et une réduction consécutive du niveau de bruit.

Selon des variantes de réalisation, il est possible d'obtenir un panneau acoustique comportant un nombre de structures à âmes alvéolaires 40,50 supérieur à deux, elles-mêmes pouvant comprendre un nombre de couches supérieur ou égal à 1.

On se reporte, plus particulièrement, à la zone de jonction J entre ces deux structures à âme alvéolaire 40,50 dans laquelle elles coopèrent.

Selon l'invention, au moins un renfort de jonction 60 est mis en place entre le bord de jonction 43 de la première structure 40 à âme alvéolaire et le bord de jonction correspondant 53 de la seconde structure 50 à âme alvéolaire dans la zone de jonction J.

Ce renfort de jonction 60 s'étend dans un plan transversal aux couches des deux structures 40,50 à âme alvéolaire, c'est-à-dire ici perpendiculairement à l'épaisseur de chacune des structures 40,50.

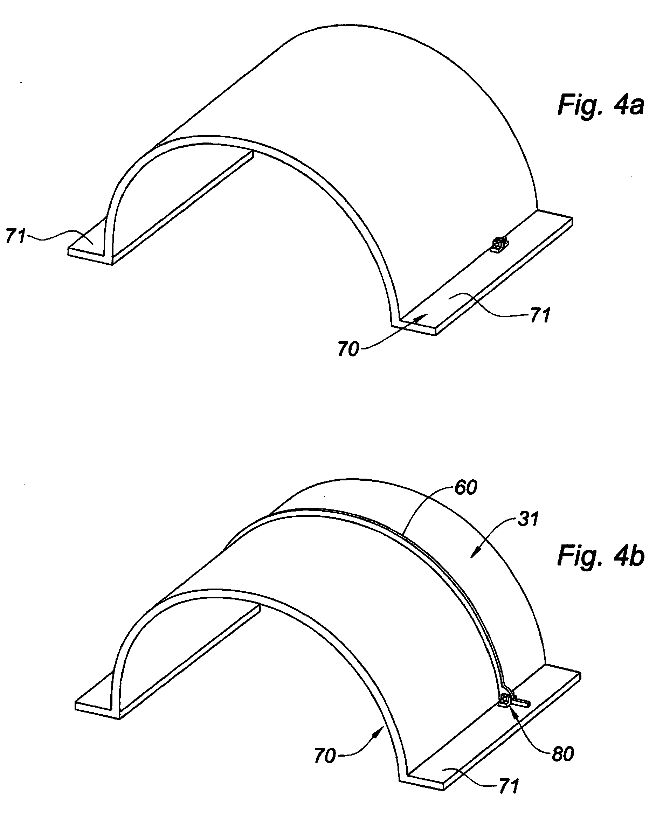

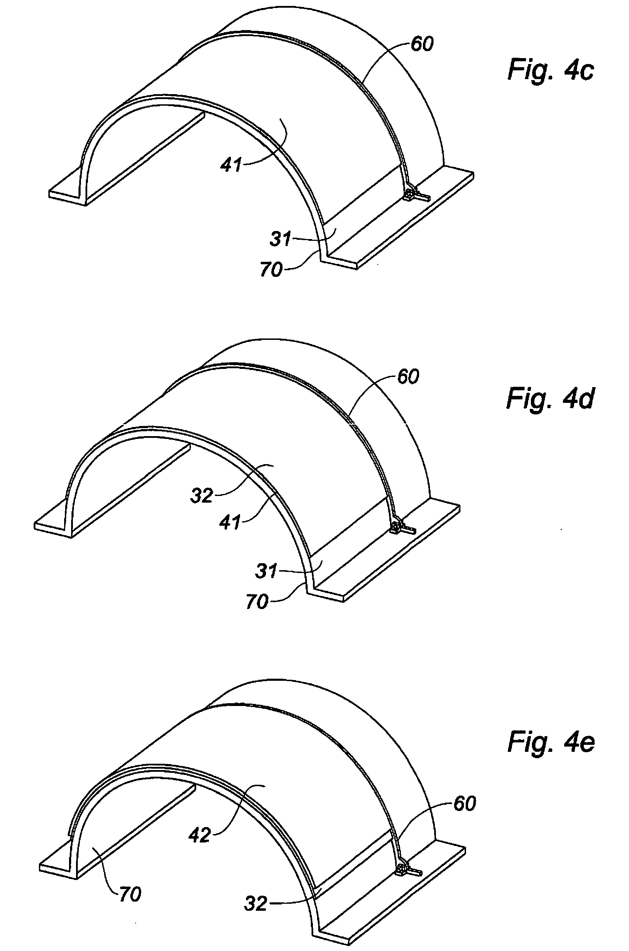

Un tel renfort de jonction 60 assure une fonction de butée d'indexage pour positionner de façon précise les différentes structures 40, 50 acoustiques les unes relativement aux autres et l'ensemble relativement au moule de fabrication du panneau, comme on va le voir plus loin en relation avec les figures 4a à 4 f.

Pour cela, on se reporte aux figures 4a à 4f en référence desquelles on décrit le procédé de fabrication du panneau acoustique de la figure 3.

En premier lieu, en référence à la figure 4a, on choisit un moule 70 de drapage, fonction du panneau acoustique 30 à fabriquer.

Dans un exemple non limitatif, on choisit ici un moule de type OFS présentant deux cornières 71 à chaque extrémité libre du moule 70, ce moule 70 présentant une forme d'arc de cercle.

Dans une étape suivante, on dépose la première peau 31 acoustique du panneau acoustique 30 sur le moule 70.

Comme illustré sur la figure 4b, on indexe, ensuite, sur la première peau acoustique 31, le renfort 60 de jonction qui va délimiter l'interface entre les deux structures acoustiques 40, 50 du panneau 30.

Un tel renfort de jonction 60 est non percé et son épaisseur est adaptée pour donner de la raideur à la jonction J entre les deux structures à âme alvéolaire 40,50.

Par ailleurs, la hauteur du renfort de jonction 60 est choisie de manière à permettre au renfort 60 de former butée latérale à l'ensemble des couches 41,42 et 51,52 formant les deux structures à âme alvéolaire 40,50 à joindre.

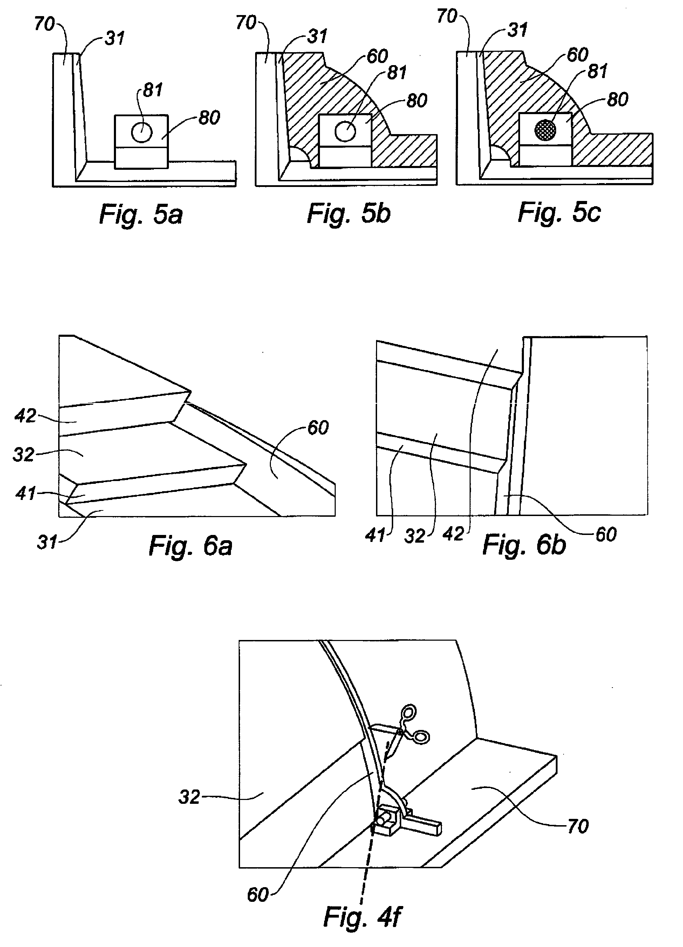

Comme illustré sur cette figure et en référence aux figures 5a à 5c, le renfort de jonction 60 s'étend sur la circonférence du moule 70 et de la première peau 31, en saillie radiale du moule 70 jusqu'aux cornières 71 où il est fixé de façon solidaire par des moyens adaptés 80.

Plus particulièrement, le renfort 60 est fixé, à ses deux extrémités libres, dans un logement et centrer grâce à la coopération de moyens de centrage et de positionnement adaptés pour traverser des orifices 81 traversant, en regard, ménagés sur les moyens de fixation 80 et le renfort 60.

Dans un mode de réalisation de la présente invention, le renfort de jonction est un profilé composite.

Dans une variante non limitative de la présente invention, ce profilé est précuit.

De préférence, ce profilé est un septum 60.

Dans un exemple non limitatif de la présente invention, un tel septum est formé en matériau du type plis de verre et époxyde.

De préférence, un tel profilé est de faible épaisseur c'est-à-dire que cette dernière est inférieure à la taille d'une cellule alvéolaire de nid d'abeille.

Par ailleurs, le renfort ou septum 60 de jonction sera joint aux différentes structures 40,50 à âme alvéolaire par un moyen de liaison adapté, comme décrit plus loin.

Dans une variante de réalisation, le moyen de liaison est un moyen de collage.

Ce moyen de collage peut être un film de colle (supporté ou non) appliqué sur au moins l'un des deux bords de jonction des structures 40,50 à âme alvéolaire et / ou sur le septum 60.

Dans une variante de réalisation, le septum 60 peut être préencollé d'un adhésif sous forme de film, avant son indexage sur le moule 70.

Dans une seconde variante, il pourra être encollé sur le moule 70 après son indexage.

En référence aux figures 4c à 4e, on dépose successivement sur la peau acoustique 31, de part et d'autre du septum de jonction 60, la première structure à âme alvéolaire 40 et la seconde structure à âme alvéolaire 50, les figures n'illustrant que la pose de la première structure 40.

Ainsi, on dépose, une première couche de structure acoustique 41,51 de part et d'autre du septum de jonction 60, sur la première peau acoustique 31 (figure 4c).

On dépose les septums 32,34 acoustiques, le cas échéant, sur la ou les couches 41,51 des structures à âme alvéolaire 40,50 (figure 4d).

On met en place, par la suite, une seconde couche 42,52 pour les structures à âme alvéolaire 40,50, le cas échéant.

Dans ce type de fabrication de panneaux acoustiques 30, comme illustré sur les figure 6a et 6b, le septum de jonction 60 forme butée latérale à chaque couche 41,51,42,52 acoustique déposées sur le moule 70 et les septums acoustiques 32, le cas échéant.

Toutefois, pour ne pas détériorer et indenter la peau externe 33 du panneau à acoustique distribuée, le septum de jonction 60 présente une hauteur moins importante que la somme des épaisseurs des différentes couches de chaque structures à âme alvéolaire 40,50 à savoir la somme des épaisseurs, ici, de la première couche 41, du septum acoustique 32 et de la seconde couche 42 en ce qui concerne la première structure à âme alvéolaire 40.

Dans une étape ultérieure illustrée sur la figure 4f, on découpe le septum 60 de jonction sur ses deux extrémités le libérant des cornières.

On vient par la suite placer sur l'ensemble des structures à âme alvéolaire la peau externe 32 qui recouvre l'ensemble des couches des deux structures à âme alvéolaire 40,50 et, également, la jonction J et le septum transversal 60.

Il est à noter qu'entre chaque dépose de couche, la jonction peut être effectuée par application d'un film de colle (supporté ou non), comme cela a été évoqué pour la jonction des bords de jonction 43,53 des deux structures à âme alvéolaire avec le septum de jonction 60.

Dans une dernière étape non illustrée, on polymérise les différentes résines et colles du panneau 30 pour obtenir le panneau acoustique illustré sur la figure 3.

Cette polymérisation peut être faite, dans un exemple non limitatif sous pression grâce à un compactage sous vessie ou par tout autre moyen adapté.

Grace à la présente invention, on propose un moyen pour joindre les structures acoustiques d'un panneau à acoustique distribuée à l'aide d'un élément placé dans leur axe de jonction, cet élément permettant à la fois de générer une liaison mécanique de faible épaisseur entre les deux zones acoustiques et de servir de butée pour réaliser le positionnement des structures acoustiques 40,50 les unes par rapport aux autres de façon précise.

Les panneaux fabriqués sont ainsi allégés et la surface acoustique améliorée.

De plus, la présence d'un septum de jonction 60 permet d'assurer un positionnement absolu du panneau 30 à fabriquer relativement au moule 70 utilisé.

Bien entendu, la présente invention n'est nullement limitée aux modes de réalisation décrits ci-dessus, fournis à titre de simples exemples mais embrasse également l'ensemble des variantes de réalisation de la présente invention.

En particulier, on peut envisager d'autres moyens de liaison et de collage ou d'autres types de panneaux que ceux à acoustique distribuée.

## Revendications

1. Procédé de fabrication d'un panneau d'atténuation acoustique (30) comprenant une première structure (40) à âme alvéolaire et une seconde structure (50) à âme alvéolaire jointes dans une zone de jonction (J), la première (40) et la seconde (50) structures à âme alvéolaire comprenant, chacune, au moins une couche à âme alvéolaire,
dans lequel :
a) On joint un bord de jonction de la première structure (40) à âme alvéolaire à un bord de jonction correspondant de la seconde structure (50) à âme alvéolaire formant la zone de jonction,
b) On place la première structure (40) à âme alvéolaire et la seconde structure (50) à âme alvéolaire entre une peau interne (31) et une peau externe (32) du panneau,
le procédé est remarquable en ce qu'il comprend, en outre :
une étape préalable à l'étape a) dans laquelle on intercale au moins un renfort (60) de jonction entre le bord de jonction de la première structure (40) à âme alvéolaire et le bord de jonction correspondant de la seconde structure (50) à âme alvéolaire dans la zone de jonction, ce renfort (60) s'étendant dans un plan transversal aux deux structures (40,50) à âme alvéolaire et
une étape ultérieure dans laquelle on solidarise l'ensemble avec un moyen de liaison.

2. Procédé selon la revendication 1 dans lequel on indexe et on fixe sur un moule dans une étape préalable, le renfort (60) de jonction.

3. Procédé selon la revendication 1 dans lequel le renfort (60) de jonction est non percé.

4. Procédé selon l'une des revendications 1 à 3 dans lequel la hauteur du renfort de jonction (60) est adaptée pour former butée aux couches de chaque structure (40,50) à âme alvéolaire.

5. Procédé selon la revendication 4 dans lequel la hauteur du renfort de jonction (60) est inférieure à la somme des épaisseurs des couches de chaque structure (40,50) à âme alvéolaire.

6. Procédé selon l'une des revendications 1 à 5 dans lequel un tel renfort de jonction est un profilé composite précuit.

7. Procédé selon la revendication 6 dans lequel le profilé composite est un septum (60).

8. Procédé selon la revendication 7 dans lequel le septum (60) est formé de plis de verre et d'époxyde.

9. Procédé selon la revendication 1 dans lequel on intercale entre les couches d'une ou de chaque structure(40,50) à âme alvéolaire un septum acoustique (32,34).

10. Procédé selon la revendication 1 dans lequel le moyen de liaison est un moyen de collage.

11. Procédé selon la revendication 10 dans lequel le moyen de collage est un film de colle (supporté ou non) appliqué sur au moins l'un des deux bords de jonction des structures (40,50) à âme alvéolaire et/ou sur le renfort de jonction (60).

12. Panneau d'atténuation acoustique fabriqué selon le procédé selon l'une des revendications 1 à 11.

13. Panneau d'atténuation acoustique selon la revendication 12 **caractérisé en ce qu'**il est à acoustique distribuée.

## Patentansprüche

1. Verfahren zur Herstellung einer Schalldämpfungsplatte (30), eine erste Struktur (40) mit Wabenkern und eine zweite Struktur (50) mit Wabenkern umfassend, die in einem Verbindungsbereich (J) verbunden sind, wobei jede der ersten (40) und der zweiten (50) Struktur mit Wabenkern jeweils zumindest eine Schicht mit Wabenkern umfasst,
wobei:
a) man eine Verbindungskante der ersten Struktur (40) mit Wabenkern mit einer entsprechenden Verbindungskante der zweiten Struktur (50) mit Wabenkern verbindet, die den Verbindungsbereich bilden,
b) man die erste Struktur (40) mit Wabenkern und die zweite Struktur (50) mit Wabenkern zwischen eine innere Hülle (31) und eine äußere Hülle (32) der Platte setzt,
wobei sich das Verfahren dadurch auszeichnet, dass es darüber hinaus folgendes umfasst:
einen Schritt vor dem Schritt a), bei dem man zumindest eine Verbindungsverstrebung (60) zwischen die Verbindungskante der ersten Struktur (40) mit Wabenkern und der entsprechenden Verbindungskante der zweiten Struktur (50) mit Wabenkern im Verbindungsbereich einsetzt, wobei sich diese Verstrebung (60) über eine querlaufende Ebene zu den beiden Strukturen (40, 50) mit Wabenkern erstreckt, und
einen späteren Schritt, bei dem man die Einheit fest mit einem Verbindungsmittel verbindet.

2. Verfahren nach Anspruch 1, wobei man die Verbindungsverstrebung (60) in einem vorangehenden Schritt auf einer Form indexiert und befestigt.

3. Verfahren nach Anspruch 1, wobei die Verbindungsverstrebung (60) nicht angebohrt ist.

4. Verfahren nach einem der Ansprüche 1 bis 3, wobei die Höhe der Verbindungsverstrebung (60) angemessen ist, um für die Schichten einer jeden Struktur (40, 50) mit Wabenkern einen Anschlag zu bilden.

5. Verfahren nach Anspruch 4, wobei die Höhe der Verbindungsverstrebung (60) kleiner ist, als die Summe der Stärken der Schichten einer jeden Struktur (40, 50) mit Wabenkern.

6. Verfahren nach einem der Ansprüche 1 bis 5, wobei eine solche Verbindungsverstrebung ein vorgebranntes Verbundprofil ist.

7. Verfahren nach Anspruch 6, wobei das Verbundprofil eine Scheidewand (60) ist.

8. Verfahren nach Anspruch 7, wobei die Scheidewand (60) aus Glasfasermatten und Epoxid gebildet wird.

9. Verfahren nach Anspruch 1, wobei man zwischen die Schichten einer oder einer jeden Struktur (40, 50) mit Wabenkern eine Akustikscheidewand (32, 34) einfügt.

10. Verfahren nach Anspruch 1, wobei das Verbindungsmittel ein Klebemittel ist.

11. Verfahren nach Anspruch 10, wobei das Klebemittel ein Klebstoff-Film (mit oder ohne Träger) ist, der auf zumindest eine der beiden Verbindungskanten der Strukturen (40, 50) mit Wabenkern und/ oder auf die Verbindungsverstrebung (60) aufgebracht wird.

12. Schalldämpfungsplatte, die gemäß dem Verfahren nach einem der Ansprüche 1 bis 11 hergestellt wird.

13. Schalldämpfungsplatte nach Anspruch 12, **dadurch gekennzeichnet, dass** sie eine Platte mit verteilter Akustik ist.

## Claims

1. A method for manufacturing an acoustic attenuation panel (30) comprising a first honeycomb core structure (40) and a second honeycomb core structure (50) joined in a junction area (J), the first (40) and the second (50) honeycomb core structures each comprising at least one honeycomb core layer,
wherein:
a) a junction edge of the first honeycomb core structure (40) is joined to a corresponding junction edge of the second honeycomb core structure (50) forming the junction area,
b) the first honeycomb core structure (40) and the second honeycomb core structure (50) are placed between an inner skin (31) and an outer skin (32) of the panel,
the method is remarkable in that it further comprises:
a step prior to step a) in which at least one junction reinforcement (60) is inserted between the junction edge of the first honeycomb core structure (40) and the corresponding junction edge of the second honeycomb core structure (50) in the junction area, this reinforcement (60) extending in a plane transverse to the two honeycomb core structures (40, 50) and
a subsequent step in which the whole is secured by a connecting means.

2. The method according to claim 1, wherein the junction reinforcement (60) is indexed and fixed on a mould in a prior step.

3. The method according to claim 1, wherein the junction reinforcement (60) is undrilled.

4. The method according to any of claims 1 to 3, wherein the height of the junction reinforcement (60) is adapted to form an abutment to the layers of each honeycomb core structure (40, 50).

5. The method according to claim 4, wherein the height of the junction reinforcement (60) is less than the sum of the thicknesses of the layers of each honeycomb core structure (40, 50).

6. The method according to any of claims 1 to 5, wherein such a junction reinforcement is a pre-cured composite profile.

7. The method according to claim 6, wherein the composite profile is a septum (60).

8. The method according to claim 7, wherein the septum (60) is formed of epoxy and glass plies.

9. The method according to claim 1, wherein an acoustic septum (32, 34) is interposed between the layers of one or each honeycomb core structure (40, 50).

10. The method according to claim 1, wherein the connecting means is a bonding means.

11. The method according to claim 10, wherein the bonding means is an adhesive film (supported or not) applied on at least one of the two junction edges of the honeycomb core structures (40, 50) and/or on the junction reinforcement (60).

12. An acoustic attenuation panel manufactured according to the method according to any of claims 1 to 11.

13. The acoustic attenuation panel according to claim 12 **characterized in that** it is a distributed acoustic panel.
